# EUROPEAN PATENT SPECIFICATION

(11) **EP 0 989 080 B1**
(45) Date of publication and mention of the grant of the patent: **16.07.2003**
(21) Application number: 98830552.0
(22) Date of filing: 23.09.1998
(51) Int. Cl.: B65G 47/91, B65B 35/38

(54) **A pick-up device, for example, for the automatic packaging of products**
Greifvorrichtung zum automatischen Verpacken von Gegenständen
Dispositif de préhension pour l'emballage automatique d'articles

(43) Date of publication of application: 29.03.2000
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., D-6000 Frankfurt am Main (DE)
(72) Inventor: Tarditi, Massimo, 12051 Alba (Cuneo) (IT)
(74) Representative: Rambelli, Paolo

(56) References cited:
- EP-A- 0 239 547
- EP-A- 0 550 114
- EP-A- 0 657 373
- EP-A- 0 768 254
- US-A- 3 168 204

## Description

The present invention relates to a gripping device according to the preamble to Claim 1.

Gripping devices of this type are known, for example, from US-A-4 832 180 or from EP-A-0 768 254.

Both of these prior documents describe gripping devices which can be used for handling food products such as, for example, pralines. The devices in question comprise a plurality of grippers (usually vacuum grippers) supported on the structure of the device so as to be movable in manner such that, having picked up the products in a first geometrical configuration, the device can deposit them after bringing them to a second geometrical arrangement different from the first.

The object of the present invention is to develop further the characteristics of flexibility shown by the solutions described in the above-mentioned prior documents. This development relates in particular to the ability to pick the products up in a flat geometrical configuration in order then to transfer them into a package with several levels, distributing the products at the various levels of the final configuration during transfer.

According to the present invention, this object is achieved by means of a device having the specific characteristics recited in the following claims.

The invention will now be described, purely by way of nonlimiting example, with reference to the appended drawings, in which:

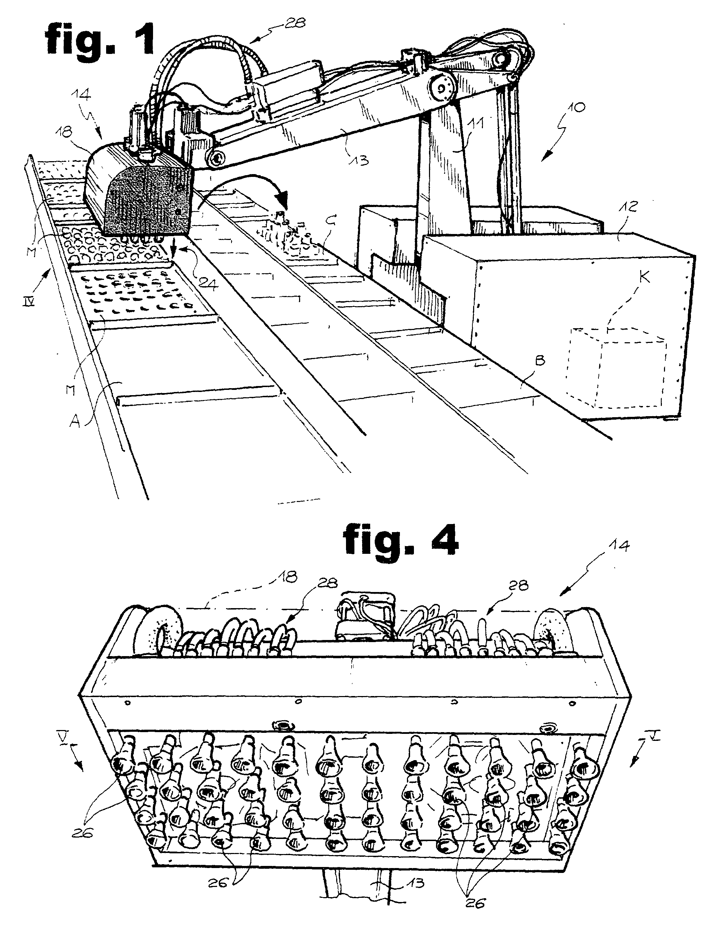

Figure 1 is a general perspective view of a device according to the invention,
Figures 2 and 3 show the arrangement of the products handled by the device of Figure 1, before and after handling, respectively,
Figure 4 is a view taken on the arrow IV of Figure 1 to give a better illustration of the structure of a portion of the device according to the invention,
Figure 5 is a side elevational view of the portion of the device of Figure 4 with various elements removed for clarity of illustration,
Figure 6 is a section taken on the line VI-VI of Figure 5, and
Figures 7 and 8 show schematically a first and a second position reached in operation by one of the movable members included in the portion of the device shown in Figures 4 to 6.

In the appended drawings, a device for manipulating articles automatically (a so-called manipulation robot) for use, for example, in a plant for the automatic packaging of food products, is generally indicated 10. Clearly, however, the fields of application of the invention are varied and, in any case, are not limited to the specific area which will be referred to below for clarity and simplicity of description.

In the use described by way of example, the device 10 is intended to operate between an input conveyor line, indicated A, (for input relative to the device) and an output conveyor line, indicated B (again, relative to the device 10).

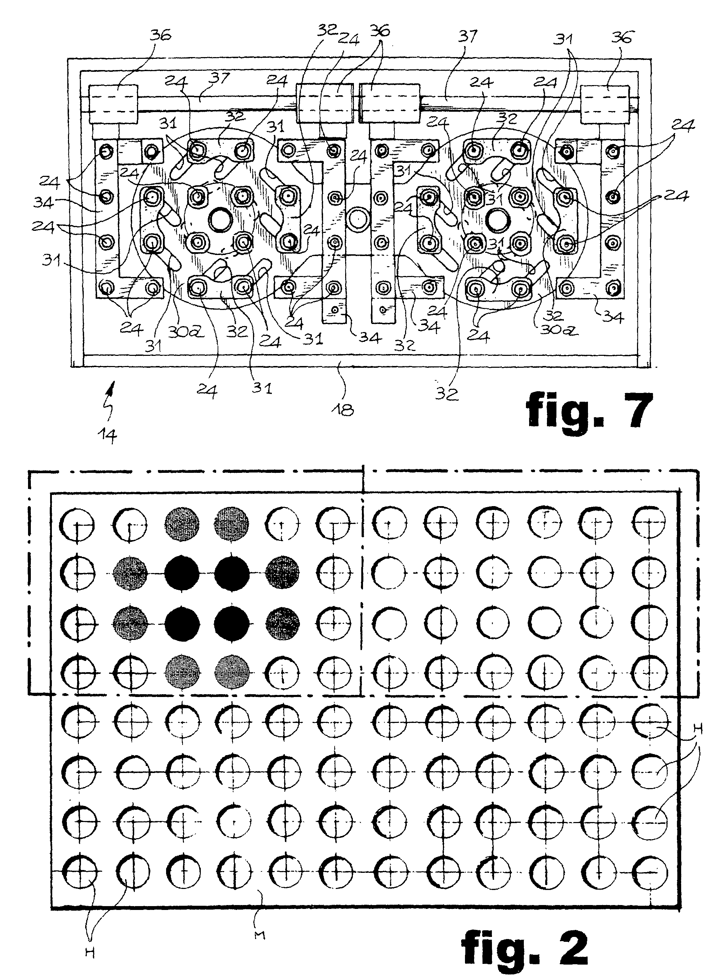

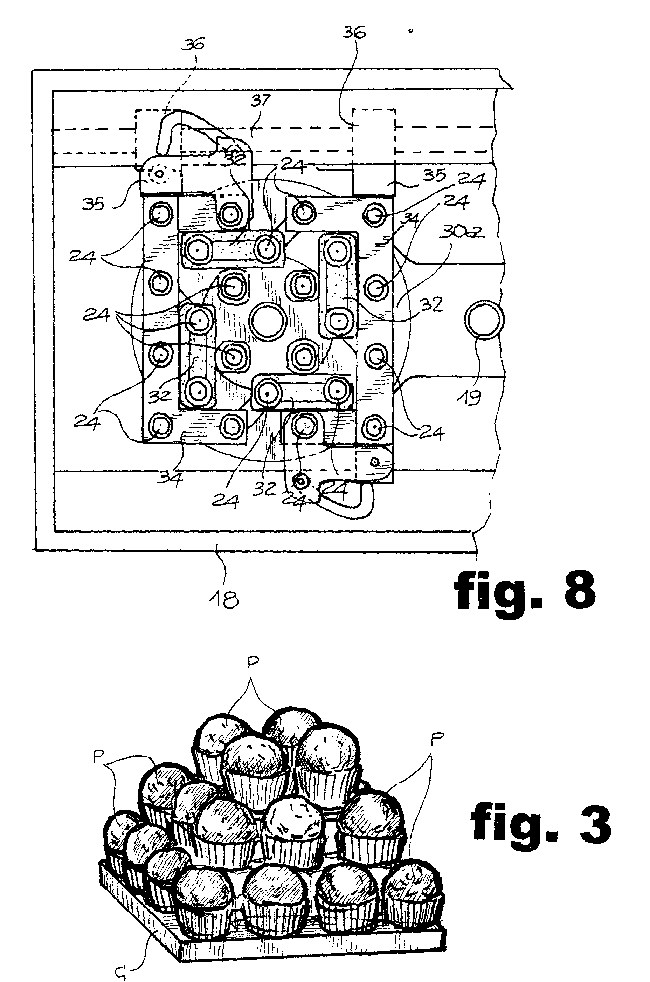

The line A is shown in the drawings in the form of a conveyor line on which a series of moulds M (Figure 2) advances, the moulds having cells H, for example, hemispherical cells, facing upwards and defining an orderly array (for example, with a rectangular grid). In these cells H there are corresponding articles or products P constituted, for example, by spherical pralines bare or, preferably, already contained in corresponding foil wrappers, possibly provided with small cases, etc. (in this connection, see Figure 3 to which explicit reference will be made below).

Conveyor lines such as those indicated A and B are widely known in the art. The products P may be constituted, for example, by pralines such as those sold by companies of the Ferrero Group under the trade names of Ferrero Rocher, Confetteria Raffaello, Tonus, Giotto, etc.

In any case, neither the specific geometry of the initial array of products P on the input line A nor the specific characteristics of the products are relevant or essential for the purposes of an understanding or of the implementation of the invention.

The output line B, on the other hand, is a line on which - in the embodiment shown (which, it is stressed once more, is an example and is not limiting of the invention) - the lower portions or bases C of packages advance, these packages being generally pyramid-shaped in the embodiment shown. The packages in question are usually intended to be closed at the top by a transparent covering also having the shape of a pyramid. In particular, it can be seen from Figure 3 that the bases C also have a generally stepped pyramid or mastaba-like shape having three respective tiers or levels of cells for housing the products P.

In the embodiment illustrated, the three levels of the base C have cells for housing twelve, eight and four products P, respectively, and hence for an overall total of twenty-four products. This set is usually intended to be completed by a twenty-fifth product located on the tip of the pyramid-shaped formation by known means (not shown).

The function of the device 10 is basically to pick up the products P from the moulds M of the input line A in which the products are arranged in a matrix-like array (for example, an array with a square, rectangular, or possibly rhomboidal grid, etc.) in order to arrange them, during the transfer movement towards the output line B, in three respective groups each to be inserted in the cells provided on one of the levels of the base C of the package. For example, with reference to the possible configuration mentioned above - the device 10 picks up, from the line A, at least one set of twenty-four products P at a time in order then to arrange them in three groups offset in three different planes and comprising twelve, eight and four products, respectively, the groups being intended to constitute the various levels of the package formed on the output line B.

The appended drawings relate to a solution of use in which the lines A and B extend side by side (with the same or opposite directions of advance), at least in the region in which the device 10 acts; however, this particular arrangement is purely an example and is certainly not essential for the purposes of the implementation of the invention.

This also applies to the general configuration of the device 10, which is shown in the form of a robot arm comprising basically, an upright or proximal portion 11 supported by a respective base 12 in an approximately vertical position with the ability to pivot to and fro about a respective horizontal swivel axis located at the lower end of the upright. The upright 11 carries, articulated to its upper end, a transverse or distal portion 13 which projects in a generally bracket-like configuration above the lines A, B, and in turn supports, at its distal end, a gripping head 14 (or actual gripping device) for acting on the products P.

The robot structure just described has associated drive and control means K (also of known type and therefore not requiring detailed description herein) which impart to the head 14 a cyclic movement comprising the following stages:
- positioning of the gripping head 14 above the input line A and lowering of the gripping elements associated therewith (these elements will be described further below) in order to pick up the products P which are disposed in the moulds M in a planar array;
- lifting of the gripping head 14, consequently picking up the articles P from the line A,
- translation of the head 14 to a position above the output line B,
- lowering and subsequent deposition of the various groups of products P (arranged on several levels, as will be described further below) in the corresponding housing cells provided in the bases C which are disposed on the line B, and
- release of the head 14 from the products P thus deposited and subsequent return to the starting position above the input line A.

Specific characteristics of the above-mentioned parts and the details relating to the performance of the individual operations described will be explained more fully below.

It is clear from the general description of the operating cycle of the device 10 that the structure described (the upright 11, the cross-member 13 and the head 14) constitutes only an example of the many possible embodiments of a robot structure of the type described above.

To cite a possible alternative example, the head 14 could be mounted on the distal end of an arm mounted in a generally flag-like arrangement on an upright located, for example, in a possible meeting or crossing region of the lines A and B (in different planes) so as to be able to move the head 14 to the various positions of the movement described above. The production of such a robot structure constitutes a current solution in the field of robotics techniques and a detailed description of the respective solutions can therefore be considered wholly superfluous and, moreover, is irrelevant *per se* for the purposes of an understanding of the description of the invention. The articulated arm structure 11, 13 referred to up to now, may thus be replaced by any equivalent handling structure.

In the embodiment described, the head structure 14 comprises a protective casing 18 having a generally channel or hood-like shape opening downwardly and supported on its generally arcuate outer side (facing upwards) by the arm 13 of the robot structure.

Inside the casing 18 there is a handling structure comprising two substantially identical elements which are symmetrical with respect to an imaginary median plane of the casing 18. A fluid actuator such as a jack 19, disposed in the said imaginary median plane, acts on the two above-mentioned symmetrical elements simultaneously.

The symmetrical structure in question enables the head 14 to act simultaneously on two sets of products P. With reference to the numerical values given above (it will remembered, purely by way of example), the head 14 can thus act simultaneously on two sets each of twenty-four products and hence on forty-eight products P to be picked up from the input line A in order to be transferred, arranged in several planes, towards two pyramid-shaped packages C advancing in sequence on the output line B.

The embodiment illustrated in the drawings relates implicitly to a method of operation in which the lines A and B are stopped momentarily when they are affected by the action of the head 14. In practice, when the head 14 picks up the products P the line A is stationary whilst the line B is advancing two new packages C for receiving the products picked up and, whilst the head 14, having moved to the line B, loads thereon the products P previously picked up, the line B is momentarily stopped. At the same time, the line A advances so as to bring a new set of products P to be picked up to the position for gripping by the head 14.

Although this embodiment is currently preferred, it is in no way essential. In particular, it is possible to consider configuring the head 14 (and the robot structure which moves it) in a manner such that the head can "follow" the line A and/or the line B during the interaction for picking up or depositing the products P.

It can also be seen from Figure 2 that, in one possible example of use of the device according to the invention, each mould M comprises four sets of twenty-four cells (and hence ninety-six cells in all) with the sets arranged in an imaginary 2 x 2 matrix. The two portions of the gripping head 14 can therefore act simultaneously on two sets disposed side by side; the return travel of the robot for returning the head 14 to a position above the line A consequently takes place alternately towards two different return positions aligned with one pair of sets of products present in each mould M and with the other.

Upon this premise, explicit reference will be made in the following description to only one of the two portions of the gripping head 14. It should, however, be understood that the two portions in question are identical, the general symmetry remaining the same.

In the embodiment illustrated, the head 14 preferably has gripping elements 24 constituted by elements of the type operating at subatmospheric pressure and each comprising, as an active gripping element, a suction-cup 26 of resiliently yielding material. This suction-cup has an axial cavity communicating, through a set of tubes 28, with a source of subatmospheric pressure (for example, a so-called vacuum pump, of known type) mounted, for example, in the base portion of the structure of the device 10.

In accordance with known criteria (in this connection reference may also be made, for example, to the documents US-A-4 832 180 and EP-A-0 768 254 already cited in the introductory part of the present description) the gripping elements 24 can be brought into contact with the products P to be picked up, thus causing the products P to be held by the suction-cup portions as a result of the activation of the vacuum lines (tubes 28) communicating with the axial cavities of the suction-cup portions 26, so that the products follow the elements 24 during the transfer movement towards the output line B. On the output line B, de-activation of the vacuum lines causes the suction-cup portions 26 of the elements 24 to release the products P which are thus deposited and left in the desired positions on the bases C.

The activation and de-activation of the gripping elements 24, their movement relative to the head 14 in the manner described further below, and the general movement of the gripping head 14 in accordance with the cycle already described above are brought about automatically in accordance with known criteria by the central processing unit K which supervises the operation of the device. This may, for example, be a programmable unit of the type currently known as a PLC (acronym for Programmable Logic Controller).

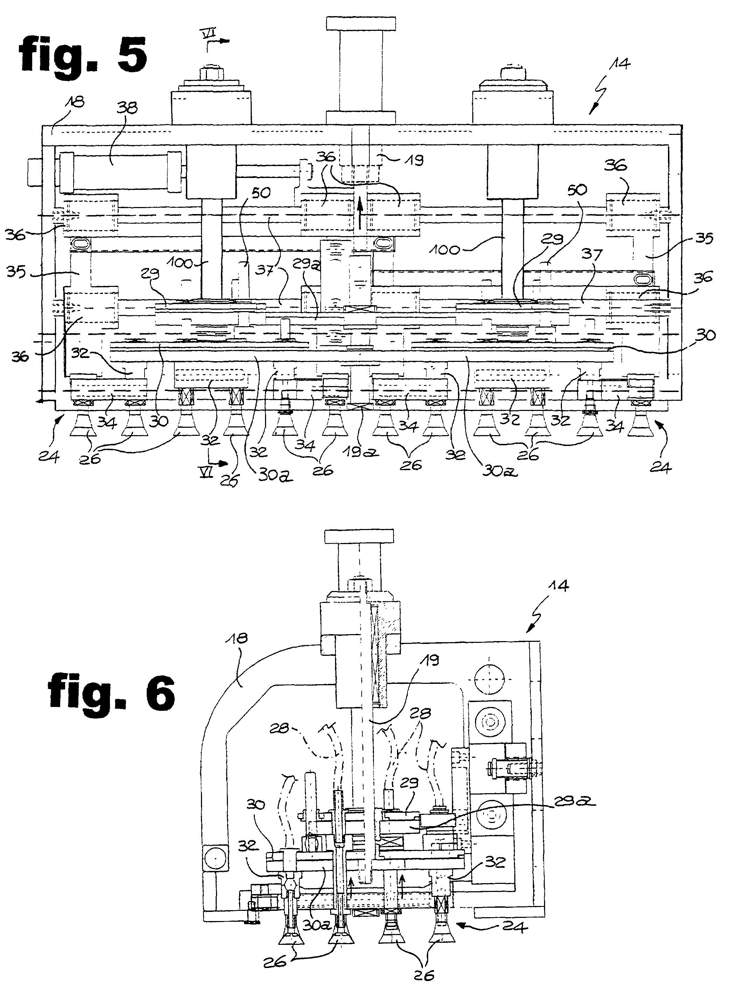

To continue with the description of the gripping elements 24, it will be noted, with regard to the positions in which these elements are mounted on the body of the head 14, that, in each of the two portions of the head 14, they can be thought of as being arranged in three groups which can best be identified from an observation of the views of Figures 5 to 8 in combination.

Proceeding in imagination from the centre towards the periphery of the array of products P picked up by the head 14 at any particular time, it is possible to recognize first of all a group of elements 24 comprising four elements 24 mounted at the vertices of an imaginary square on a plate 29.

The plate 29, as well as the twin plate disposed on the other side of the head 14, are mounted so as to be rotatable about respective vertical axes on a support plate 29a having a shape generally approximately comparable to an 8 (or to a biscuit with enlarged ends). The plate 29a is connected, in a central position, to the rod of the actuator 19 in a manner such that, when the actuator is activated, withdrawing its rod upwardly, the support plate 29a is raised and the plates 29 as well as the gripping elements 24 mounted thereon are carried upwards therewith.

The support plate 29a has openings for the passage of the rods of the elements 24, these rods projecting downwards from the plates 29. The openings extend along defined paths such that, when each plate 29 rotates about its own axis driven by a respective shaft 50 mounted on a plate 30, the rods of the elements 24 and the sides of the openings in the plates 29 and 29a cooperate like cams so that the elements in question, which were originally disposed at the vertices of a square, are arranged at the vertices of a square of larger dimensions, by moving along the path.

A substantially similar mounting configuration is used for a second group of elements 24, disposed in positions relatively farther out than the elements 24 mounted on the plates 29.

In the case of this second group of elements 24 a rotary plate 30 is provided (on each side of the head 14 in a generally symmetrical arrangement), supported by a support plate 30a which is also shaped like a figure 8 or a biscuit with enlarged ends, and is intended to cooperate, in a central position, with the rod of the actuator 19.

However, whereas the support plate 29a (and the plates 29 with the respective elements 24) follow the vertical movements of the rod of the actuator 19 directly, the plate 30a is fitted on the rod in question in a manner such that the rod is free to slide vertically upwards until an enlarged head 19a provided at the lower end of the rod abuts the edge of the opening in which the rod of the actuator 19 extends through the plate 30a. At this point and only at this point, the plate 30a as well as the plates 30 with the respective elements 24 follow the actuator rod in its lifting movement.

As can easily be understood this "delay" in the upward movement of the plate 30a relative to the plate 29a is intended - and is regulated in a manner such as - to arrange that when the rod of the actuator 19 has been withdrawn to the uppermost position provided for, the plates 29a and 30a and the respective groups of elements 24 are offset in height by the amount required in order to locate the respective products P on the two uppermost steps of the pyramid defined by each package C. Another difference which may be noticed between the first and second groups of elements 24 considered above is that the elements 24 associated with the plates 29 retain their geometrical arrangement at the vertices of a square even after the rotation of the plates 29.

In contrast, as can best be appreciated from an observation of Figures 6, 7 and 8 in combination, the elements 24 associated with the plate 30 are connected to pairs of blocks 32 (vacuum distributors) clearly visible beneath the plate 30a; two pins are mounted on each block 32, on the opposite side to the elements 24, one pin being perforated and extended for the fitting of the tube 28 and communicating with a distributor chamber of the block 32. These pins extend through respective openings 31 provided in the plate 30a and through a corresponding number of openings formed in the plates 30, and intersecting the former ones. These openings extend along paths defined in a manner such that, when each plate 30 rotates, the rods of the elements 24 and the sides of the openings 31 cooperate like cams so that the elements in question, which were originally disposed at the vertices of an imaginary octagon surrounding the square array of elements 24 mounted on the overlying plate 29 (the arrangement shown in Figure 7) are disposed at the vertices and in intermediate positions on each side of an imaginary square which surrounds the square array of elements mounted on the plate 29 (the arrangement shown in Figure 8). In order to render this movement safer and more uniform, a treated steel blade is preferably disposed between the upper portion of the plate 30 and the pair of pins mounted on the block 32. Otherwise, the kinematic solution is substantially similar to that described in EP-A-0 768 254.

In the gripping head under examination, the plates 30 are rotated by means of a linkage connected to an element 35 moved by the actuator 38, which will be referred to further below. Even though the linkage connects the kinematic mechanism and the rotary plates 29 and 30 to the movement of C-shaped plates 34, it allows the sets of plates 29-29a, 30-30a to move vertically completely freely.

Finally, a third group of elements 24 comprises twelve elements 24 which are mounted on two plates 34 with movable parts (that is, capable of movement relative to one another in the manner described below) and which can thus be regarded as being divided into two sub-groups each comprising six elements 24 mounted on one plate 34 and on the other, respectively. The plates 34 are generally C-shaped with a movable end guided, by means of a pin, by a cam formed on a cross-member 51. The movement of the movable end articulated to the plate 34 enables the plate not to interfere with the elements 24 of the plates 30 and their blocks 32 during the horizontal translation; each movable end carries an element 24 and a rubber-tube connector as an attachment for a vacuum line 28. In the starting position corresponding to the position for picking up the products P on the line A (Figure 7), the respective twelve gripping elements 24 are disposed in a rectangular pattern the two longer sides of which include, as a central portion, one of the blocks 32 with which two gripping elements 24 of the second group are associated.

In particular, it can be seen in Figure 5 that each C-shaped plate 34 is supported by an element 35 extending upwardly and comprising a pair of sleeves 36 mounted for sliding on respective cylindrical horizontal guides 37 disposed one above the other. The movement of the sleeves 36 on the guides 37 takes place under the action of a respective actuator 38 visible on the top left-hand side of Figure 5.

An important characteristic of the solution according to the invention is that the gripping elements 24 included in the three groups described above can perform a relative translational movement in a direction generally perpendicular to the common plane in which the gripping elements 24 (and, in particular, their suction-cup-like gripping portions 26) lie when the products P are picked up from the line A.

This capability for relative movement results from the following facts:
- the plates 29 on which the elements 24 in the most central positions are situated are connected directly to the rod of the actuator 19- by the plate 29a - so that they can follow the vertical translational movement thereof;
- the plates 30, on which the elements 24 in positions relatively farther out are situated also follow the movement of the rod of the actuator 19 but only from the moment at which the enlarged head 19a engages the plate 30a, so as to be located in the desired position, offset in height relative to the plates 29, and
- the plates 34 and the elements 24 carried thereby perform no vertical translational movement so that, when the actuator 19 is withdrawn fully upwards, the respective elements 24 are offset (downwards) relative to the elements 24 carried by the plates 30 by an amount equal to the height of the lowest step of the pyramid of the package C.

The set of elements indicated above is consequently generally movable between:
- a first position, which may be defined as the position for picking up the products P, in which all of the gripping elements 24 are substantially coplanar with one another or, in any case, are in a position such that the gripping portions 26 mounted thereon are kept in a coplanar condition so that the products P arranged in a flat array on the moulds M advancing on the line A can be picked up, and
- a second position, which can be defined as the position for depositing the products P, in which the aforesaid portions reach positions in which they are offset in height so that the gripping portions 26 of the respective gripping elements 24 are disposed in three orderly groups in positions corresponding to the three planes of the pyramid-like structure to be formed on the bases C located on the line B.

In contrast with the solutions described in the prior documents cited in the introductory portion of the description, during the movement from the line A to the line B, the gripping elements 26 do not therefore retain the coplanar or substantially coplanar condition reached when the products P are picked up from the line A but, on the contrary, perform a so to speak "vertical" relative translational movement (relative to the plane of the starting array) which is intended to arrange them on several planes corresponding precisely to the various planes of the base C.

Clearly, however, the solution according to the invention should not be understood as being limited to the possible application to the pyramid-like structure of the bases C shown in the appended drawings. The solution according to the invention may in fact be implemented, in general, in order to give rise to a three-dimensional array of products having the most varied characteristics, starting with a flat array. For example, the solution according to the invention may be used to fill a package in which the products P are disposed in a generally bell-shaped, spherical, or tree-shaped configuration.

In the embodiment illustrated by way of example in the appended drawings, the vertical translational movement of the various groups of gripping elements 24 is in fact also combined, for at least some of the elements 24, with a change in the relative positions of the gripping elements included in a single starting group or array.

Thus, in the embodiment illustrated (but in possible variants of the invention the solution could be different) the elements 24 mounted on the plates 29 and on the plates 30 change their relative arrangement at least partially during the transfer from the line A to the line B.

As already stated, this result can be achieved by forming the support structure 32 in a manner substantially similar to that described in US-A-4 832 180 or EP-A-0 768 254.

In any case, the specific methods of bringing about these movements may be considered known *per se* and can easily be inferred from the prior documents already mentioned above.

With regard to the capability for relative movement of the two plates 34 on which the gripping elements 24 for gripping the products P of the outermost row of the array picked up from the line A are located, the relative movement takes place substantially in the direction of a relative movement towards one another of the two plate-like portions 34 which - as already stated - have a generally C-shaped configuration opening towards one another. This movement, which is brought about by the actuator 38 is intended, in the embodiment illustrated, to enable the respective group of products P which was originally picked up in an approximately rectangular pattern to be deposited in a square pattern.

Clearly, the principle of the relative movement remaining the same, the solutions described may be exchanged and combined both with one another and with other solutions otherwise known to an expert in the art in order to achieve maximum versatility and flexibility in the combination of the vertical movement described above with the horizontal movement for re-arranging the elements 24 and hence the products P carried thereby within the respective configuration.

The principle of the invention remaining the same, the details of construction and forms of embodiment may consequently be varied widely with respect to those described and illustrated, without thereby departing from the scope of the present invention as defined in the appended claims.

## Claims

1. A gripping device including a plurality of gripping elements (24) which can be positioned selectively in at least one first position and at least one second position so as to enable articles (P) to be picked up in a first relative spatial arrangement and the same articles (P) to be deposited in a second relative spatial arrangement, **characterized in that** the gripping elements (24) are arranged in at least two groups with respective associated support structures (29, 30, 34) which can perform a relative movement between at least one first position, in which the gripping elements (24) are substantially coplanar with one another, and at least one second position in which the at least two groups including the gripping elements (24) are offset relative to one another in a direction generally perpendicular to the plane defined by the former coplanar condition.

2. A device according to Claim 1, **characterized in that** drive means (19) are associated with the support structures (29, 30, 34) in order to bring about the relative movement, the drive means including at least one fluid actuator (38).

3. A device according to Claim 1 or Claim 2, **characterized in that** the support structures (29, 30, 34) are of generally plate-like structure and are oriented in a common direction, and **in that** the relative movement is performed in a direction substantially perpendicular to the said common direction of extent.

4. A device according to any one of the preceding claims, **characterized in that** it includes a first support structure (29) and a second support structure (30) for respective groups of gripping elements (24), as well as drive means (19) acting in the direction of the relative movement, the drive means being coupled to the first support structure (29) and to the second support structure (30) in a direct-drive relationship for the first support structure (29), and in a drive relationship which permits a free relative sliding travel until a relative engagement condition (19a) is reached for the second support structure, the extent of the travel defining the extent of the relative offset of the first support structure (29) and the second support structure (30) in the second position.

5. A device according to Claim 4, **characterized in that** the relative engagement condition is defined by the abutment of an enlarged head portion (19a) of the drive means against the second support structure (30, 30a).

6. A device according to any one of the preceding claims, **characterized in that** it includes at least one group (34) of gripping elements (24) which remains in a substantially fixed position with respect to the direction of the relative movement.

7. A device according to any one of the preceding claims, **characterized in that** the at least two support structures (29, 30, 34) have a generally concentric arrangement.

8. A device according to any one of the preceding claims, **characterized in that** the gripping elements (24) on at least one (30, 34) of the support structures are mounted with a capability for relative movement, so that the relative translational movement of the support structures (29, 30, 34) can be combined with a relative movement of the gripping elements (24) within the respective support structure (30, 34).

9. A device according to Claim 1, **characterized in that** at least one (30) of the support structures has associated actuator means (31) which can be operated selectively in order to move at least one of the gripping elements (24) mounted on the respective support structure (30) between
- at least one first respective position which is adopted when the support structures (29, 30, 34) are in the first, substantially coplanar position, and
- at least one second respective position which is adopted when the support structures (29, 30, 34) are in the at least one second, offset position.

10. A device according to Claim 9, **characterized in that** the actuator means include at least one plate (30a) having slots (31) the walls of which perform a cam function.

11. A device according to Claim 9, **characterized in that** at least one of the support structures (34) is composed of at least two portions each carrying at least one respective gripping element (24), drive means (35 to 38) being interposed between the at least two portions in order to bring about a relative movement of the at least two portions towards and away from one another in the plane defined by the first coplanar condition.

12. A device according to Claim 6 and Claim 11, **characterized in that** the support structure (34) including the at least two carrying portions carries the at least one group of gripping elements (24) which remain in a substantially fixed position with respect to the direction of relative movement.

13. A device according to any one of Claims 9 to 12, **characterized in that**:
- in the at least one first respective position, the gripping elements (24) associated with the support structure (29, 30, 34) are arranged in a matrix-like array, arranged in rows and columns, and
- in the at least one second respective position, the gripping elements (24) associated with the support structure (29, 30, 34) are disposed in respective patterns substantially surrounding one another.

14. A device according to any one of the preceding claims, **characterized in that** the gripping elements (24) are gripping elements operating by suction (26).

## Patentansprüche

1. Greifvorrichtung, umfassend mehrere Greifelemente (24), die selektiv in mindestens einer ersten Position und mindestens einer zweiten Position positioniert werden können, so dass Gegenstände (P) in einer ersten relativen räumlichen Anordnung aufgenommen werden und die gleichen Gegenstände (P) in einer zweiten relativen räumlichen Anordnung abgelegt werden können, **dadurch gekennzeichnet, dass** die Greifelemente (24) in mindestens zwei Gruppen mit jeweiligen zugehörigen Stützstrukturen (29, 30, 34) angeordnet sind, die eine Relativbewegung zwischen mindestens einer ersten Position, in der die Greifelemente (24) im wesentlichen coplanar zueinander sind, und mindestens einer zweiten Position durchführen können, in der die mindestens zwei Gruppen, die die Greifelemente (24) umfassen, relativ zueinander in einer Richtung im wesentlichen senkrecht zu der Ebene, die durch den vorherigen coplanaren Zustand definiert wird, versetzt sind.

2. Vorrichtung nach Anspruch 1, **dadurch gekennzeichnet, dass** Antriebsmittel (19) den Stützstrukturen (29, 30, 34) zugeordnet sind, um die Relativbewegung hervorzurufen, wobei die Antriebsmittel mindestens eine Fluidbetätiger (38) umfassen.

3. Vorrichtung nach Anspruch 1 oder 2, **dadurch gekennzeichnet, dass** die Stützstrukturen (29, 30, 34) eine im allgemeinen plattenartige Struktur aufweisen und in einer gemeinsamen Richtung gerichtet sind, und dass die Relativbewegung in einer Richtung im wesentlichen senkrecht zu der gemeinsamen Erstreckungsrichtung ausgeführt wird.

4. Vorrichtung nach einem der vorhergehenden Ansprüche, **dadurch gekennzeichnet, dass** sie eine erste. Stützstruktur (29) und eine zweite Stützstruktur (30) für jeweilige Gruppen von Greifelementen (24) umfasst, ebenso wie Antriebsmittel (19), die in der Richtung der Relativbewegung wirken, wobei die Antriebsmittel mit der ersten Stützstruktur (29) und mit der zweiten Stützstruktur (30) in einem Direktantriebsverhältnis für die erste Stützstruktur (29) verbunden sind, und in einem Antriebsverhältnis, das eine freie relative Verschiebebewegung erlaubt, bis ein relativer Eingriffszustand (19a) für die zweite Stützstruktur erreicht ist, wobei das Maß der Bewegung das Maß des relativen Versatzes der ersten Stützstruktur (29) und der zweiten Stützstruktur (30) in der zweiten Position definiert.

5. Vorrichtung nach Anspruch 4, **dadurch gekennzeichnet, dass** der relative Eingriffszustand durch den Anschlag eines vergrößerten Kopfbereichs (19a) der Antriebsmittel gegen die zweite Stützstruktur (30, 30a) definiert wird.

6. Vorrichtung nach einem der vorhergehenden Ansprüche, **dadurch gekennzeichnet, dass** sie mindestens eine Gruppe (34) von Greifelementen (24) umfasst, die in einer im wesentlichen festgelegten Position in bezug auf die Richtung der Relativbewegung bleibt.

7. Vorrichtung nach einem der vorhergehenden Ansprüche, **dadurch gekennzeichnet, dass** die mindestens zwei Stützstrukturen (29, 30, 34) eine im wesentlichen konzentrische Anordnung aufweisen.

8. Vorrichtung nach einem der vorhergehenden Ansprüche, **dadurch gekennzeichnet, dass** die Greifelemente (24) auf mindestens einer (30, 40) der Stützstrukturen mit der Fähigkeit zur Relativbewegung montiert sind, so dass die translatorische Relativbewegung der Stützstrukturen (29, 30, 34) mit einer Relativbewegung der Greifelemente (24) innerhalb der jeweiligen Stützstruktur (30, 34) kombiniert werden kann.

9. Vorrichtung nach Anspruch 1, **dadurch gekennzeichnet, dass** mindestens eine (30) der Stützstrukturen zugehörige Betätigungsmittel (31) aufweist, die selektiv betrieben werden können, um mindestens eines der Greifelemente (24), das auf der jeweiligen Stützstruktur (30) montiert ist, zu bewegen zwischen:
- mindestens einer ersten jeweiligen Position, die eingenommen wird, wenn die Stützstrukturen (29, 30, 34) in der ersten, im wesentlichen coplanaren Position sind, und
- mindestens einer zweiten jeweiligen Position, die eingenommen wird, wenn die Stützstrukturen (29, 30, 34) in der mindestens einen zweiten, versetzten Position sind.

10. Vorrichtung nach Anspruch 9, **dadurch gekennzeichnet, dass** die Betätigungsmittel mindestens eine Platte (30a) umfassen, die Schlitze (31) aufweist, deren Wände eine Nockenfunktion ausüben.

11. Vorrichtung nach Anspruch 9, **dadurch gekennzeichnet, dass** mindestens eine der Stützstrukturen (34) sich aus mindestens zwei Bereichen zusammensetzt, die jeweils mindestens ein jeweiliges Greifelement (24) tragen, wobei Antriebsmittel (35 bis 38) zwischen die mindestens zwei Bereiche geschaltet sind, um eine Relativbewegung der mindestens zwei Bereiche in Richtung aufeinander zu und voneinander weg in der Ebene hervorzurufen, die durch den ersten coplanaren Zustand definiert wird.

12. Vorrichtung nach Anspruch 6 und Anspruch 11, **dadurch gekennzeichnet, dass** die Stützstruktur (34), die die mindestens zwei Tragebereiche umfasst, mindestens eine Gruppe von Greifelementen (24) trägt, die in einer im wesentlichen festgelegten Position in bezug auf die Richtung der Relativbewegung bleiben.

13. Vorrichtung nach einem der Ansprüche 9 bis 12, **dadurch gekennzeichnet, dass**:
- in der mindestens einen ersten jeweiligen Position die Greifelemente (24), die zu der Stützstruktur (29, 30, 34) gehören, in einer matrixartigen Anordnung, angeordnet in Reihen und Spalten, angeordnet sind, und
- in der mindestens einen zweiten jeweiligen Position die Greifelemente (24), die zu der Stützstruktur (29, 30, 34) gehören, in jeweiligen Mustern im wesentlichen einander umgebend angeordnet sind.

14. Vorrichtung nach einem der vorhergehenden Ansprüche, **dadurch gekennzeichnet, dass** die Greifelemente (24) Greifelemente sind, die durch Saugwirkung (26) betätigt werden.

## Revendications

1. Dispositif de préhension, incluant une pluralité d'éléments de préhension (24) qui peuvent être positionnés de manière sélective dans au moins une première position et au moins une seconde position de manière à permettre à des articles (P) d'être pris dans un premier agencement spatial relatif, et aux mêmes articles (P) d'être déposés dans un second agencement spatial relatif, **caractérisé en ce que** les éléments de préhension (24) sont agencés en au moins deux groupes munis de structures de support associées respectives (29, 30, 34) qui peuvent effectuer un déplacement relatif entre au moins une première position, dans laquelle les éléments de préhension (24) sont sensiblement coplanaires les uns par rapport aux autres, et au moins une seconde position dans laquelle les au moins deux groupes incluant les éléments de préhension (24) sont décalés l'un par rapport à l'autre dans une direction généralement perpendiculaire au plan défini par l'état coplanaire précédent.

2. Dispositif selon la revendication 1, **caractérisé en ce que** des moyens d'entraînement (19) sont associés aux structures de support (29, 30, 34) pour provoquer le déplacement relatif, les moyens d'entraînement comportant au moins un actionneur à fluide (38).

3. Dispositif selon la revendication 1 ou 2, **caractérisé en ce que** les structures de support (29, 30, 34) ont une structure généralement analogue à une plaque, et sont orientées dans une direction commune, et **en ce que** le déplacement relatif est effectué dans une direction sensiblement perpendiculaire à ladite direction d'étendue commune.

4. Dispositif selon l'une quelconque des revendications précédentes, **caractérisé en ce qu'**il comporte une première structure de support (29) et une seconde structure de support (30) pour des groupes respectifs d'éléments de préhension (24), de même que des moyens d'entraînement (19) agissant dans la direction du déplacement relatif, les moyens d'entraînement étant accouplés à la première structure de support (29) et à la seconde structure de support (30) dans une relation d'entraînement direct de la première structure de support (29), et dans une relation d'entraînement qui permet un déplacement de coulissement relatif libre jusqu'à ce qu'un état de coopération relatif (19a) de la seconde structure de support soit atteint, l'étendue du déplacement définissant l'étendue du décalage relatif de la première structure de support' (29) et de la seconde structure de support (30) dans la seconde position.

5. Dispositif selon la revendication 4, **caractérisé en ce que** l'état de coopération relatif est défini par la butée d'une partie de tête agrandie (19a) des moyens d'entraînement contre la seconde structure de support (30, 30a).

6. Dispositif selon l'une quelconque des revendications précédentes, **caractérisé en ce qu'**il comporte au moins un groupe (34) d'éléments de préhension (24) qui reste dans une position sensiblement fixe par rapport à la direction du déplacement relatif.

7. Dispositif selon l'une quelconque des revendications précédentes, **caractérisé en ce que** les au moins deux structurés de support (29, 30, 34) ont un agencement généralement concentrique.

8. Dispositif selon l'une quelconque des revendications précédentes, **caractérisé en ce que** les éléments de préhension (24) situés sur au moins une (30, 34) des structures de support sont montés avec une capacité de déplacement relatif, de telle sorte que le déplacement de translation relatif des structures de support (29, 30, 34) peut être combiné avec un déplacement relatif des éléments de préhension (24) à l'intérieur de la structure de support respective (30, 34).

9. Dispositif selon la revendication 1, **caractérisé en ce qu'**au moins une (30) des structures de support a des moyens d'actionnement associés (31) qui peuvent être actionnés de manière sélective pour déplacer au moins un des éléments de préhension (24) monté sur la structure de support respective (30) entre
- au moins une première position respective qui est adoptée lorsque les structures de support (29, 30, 34) sont dans la première position sensiblement coplanaire, et
- au moins une seconde position respective qui est adoptée lorsque les structures de support (29, 30, 34) sont dans la au moins une seconde position décalée.

10. Dispositif selon la revendication 9, **caractérisé en ce que** les moyens d'actionnement comportent au moins une plaque (30a) ayant des fentes (31) dont les parois remplissent une fonction de came.

11. Dispositif selon la revendication 9, **caractérisé en ce qu'**au moins une des structures de support (34) est constituée d'au moins deux parties portant chacune au moins un élément de préhension respectif (24), dès moyens d'entraînement (35 à 38) étant interposés entre les au moins deux parties pour provoquer un déplacement relatif des au moins deux parties l'une vers l'autre, et loin l'une de l'autre, dans le plan défini par le premier état coplanaire.

12. Dispositif selon la revendication 6 et la revendication 11, **caractérisé en ce que** la structure de support (34) comportant les au moins deux parties portantes porte le au moins un groupe d'éléments de préhension (24) qui reste dans une position sensiblement fixe par rapport à la direction de déplacement relatif.

13. Dispositif selon l'une quelconque des revendications 9 à 12, **caractérisé en ce que** :
- dans la au moins une première position respective, les éléments de préhension (24) associés à la structure de support (29, 30, 34) sont agencés selon un réseau analogue à une matrice, agencés en rangs et en colonnes, et
- dans la au moins une seconde position respective, les éléments de préhension (24) associés à la structure de support (29, 30, 34) sont disposés selon des motifs respectifs s'entourant sensiblement les uns les autres.

14. Dispositif selon l'une quelconque des revendications précédentes, **caractérisé en ce que** les éléments de préhension (24) sont des éléments de préhension fonctionnant par aspiration (26).
